(19) Europäisches Patentamt
European Patent Office
Office européen des brevets

(11) **EP 4 757 466 A1**

(12) **EUROPEAN PATENT APPLICATION**
published in accordance with Art. 153(4) EPC

(43) Date of publication:
**10.06.2026 Bulletin 2026/24**

(21) Application number: **24850885.5**

(22) Date of filing: **31.07.2024**

(51) International Patent Classification (IPC):
***H04W 72/21*** (2023.01)

(52) Cooperative Patent Classification (CPC):
**H04W 52/36; H04W 72/0446; H04W 72/21**

(86) International application number:
**PCT/CN2024/108918**

(87) International publication number:
**WO 2025/031240 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 CN 202310981365**

(71) Applicant: **Vivo Mobile Communication Co., Ltd.
Dongguan, Guangdong 523863 (CN)**

(72) Inventors:
• **LIN, Zhipeng**
**Dongguan, Guangdong 523863 (CN)**
• **TAMRAKAR, Rakesh**
**Dongguan, Guangdong 523863 (CN)**
• **JIANG, Wei**
**Dongguan, Guangdong 523863 (CN)**
• **FENG, Sanjun**
**Dongguan, Guangdong 523863 (CN)**
• **MO, Yitao**
**Dongguan, Guangdong 523863 (CN)**

(74) Representative: **Studio Torta S.p.A.
Via Viotti, 9
10121 Torino (IT)**

(54) **POWER CLASS RELATED INFORMATION REPORTING METHOD AND APPARATUS**

(57) This application discloses a power class-related information reporting method and apparatus, and belongs to the field of communication technologies. The power class-related information reporting method in embodiments of this application includes: A terminal determines power class-related information, and the terminal reports the power class-related information to a network-side device in a case that a first condition is met, where the first condition is a trigger condition for reporting the power class-related information.

A terminal determines power class-related information — 501

The terminal reports the power class-related information to a network-side device in a case that a first condition is met, where the first condition is a trigger condition for reporting the power class-related information — 502

FIG. 5

Processed by Luminess, 75001 PARIS (FR)

## Description

### CROSS-REFERENCE TO RELATED APPLICATIONS

This application claims priority to Chinese Patent Application No. 202310981365.6, filed in China on August 4, 2023, which is incorporated herein by reference in its entirety.

### TECHNICAL FIELD

This application pertains to the field of communication technologies, and specifically relates to a power class-related information reporting method and apparatus.

### BACKGROUND

To enable a network-side device to flexibly adjust UE resource scheduling in a timely manner based on a power class change of user equipment (User Equipment, UE) and a duty (duty) status change of the UE, a third-generation partnership project (3rd Generation Partnership Project, 3GPP) version (Rel)-18 decides to support reporting of the UE for a delta power class (Delta Power Class, DPC).
To support DPC reporting, how the UE reports power class-related information is a technical problem that needs to be urgently resolved.

### SUMMARY

Embodiments of this application provide a power class-related information reporting method and apparatus, which can resolve a problem of how UE reports power class-related information.
According to a first aspect, a power class-related information reporting method is provided, including:

determining, by a terminal, power class-related information; and
reporting, by the terminal, the power class-related information to a network-side device in a case that a first condition is met, where the first condition is a trigger condition for reporting the power class-related information.

According to a second aspect, a power class-related information reporting apparatus is provided, including:

a first determining module, configured to determine power class-related information; and
a first reporting module, configured to report the power class-related information to a network-side device in a case that a first condition is met, where the first condition is a trigger condition for reporting the power class-related information.

According to a third aspect, a terminal is provided, the terminal includes a processor and a memory, the memory stores a program or instructions capable of running on the processor, and the program or the instructions are executed by the processor to implement the steps of the method according to the first aspect.
According to a fourth aspect, a terminal is provided, including a processor and a communication interface, and the processor is configured to determine power class-related information; and report the power class-related information to a network-side device in a case that a first condition is met, where the first condition is a trigger condition for reporting the power class-related information.
According to a fifth aspect, a readable storage medium is provided, the readable storage medium stores a program or instructions, and the program or the instructions are executed by a processor to implement the steps of the method according to the first aspect.
According to a sixth aspect, a chip is provided, the chip includes a processor and a communication interface, the communication interface is coupled to the processor, and the processor is configured to run a program or instructions to implement the method according to the first aspect.
According to a seventh aspect, a computer program/program product is provided. The computer program/program product is stored in a storage medium. The program/program product is executed by at least one processor to implement the steps of the power class-related information reporting method according to the first aspect.
In the embodiments of this application, the terminal determines the power class-related information. In the case that the first condition is met, the terminal can report the power class-related information to the network-side device in a timely manner because the first condition is the trigger condition for reporting the power class-related information, thereby implementing timely reporting of the power class-related information.

**BRIEF DESCRIPTION OF DRAWINGS**

FIG. 1 is a schematic diagram of a wireless communication system applicable to an embodiment of this application;

FIG. 2 is a schematic diagram of PHR transmission on a DG PUSCH according to the prior art;

FIG. 3 is a schematic diagram of PHR transmission on a CG PUSCH according to the prior art;

FIG. 4 is a schematic diagram of a format of a multi-entity PHR MAC-CE according to the prior art;

FIG. 5 is a schematic flowchart of a power class-related information reporting method according to an embodiment of this application;

FIG. 6 is a schematic diagram of a format of a first MAC-CE according to an embodiment of this application;

FIG. 7 is a schematic diagram 1 of a format of a second MAC-CE according to an embodiment of this application;

FIG. 8 is a schematic diagram 2 of a format of a second MAC-CE according to an embodiment of this application;

FIG. 9 is a schematic diagram 1 of reporting a DPC based on each beam according to an embodiment of this application;

FIG. 10 is a schematic diagram 2 of reporting a DPC based on each beam according to an embodiment of this application;

FIG. 11 is a schematic structural diagram of a power class-related information reporting apparatus according to an embodiment of this application; and

FIG. 12 is a schematic structural diagram of a terminal according to an embodiment of this application.

**DESCRIPTION OF EMBODIMENTS**

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

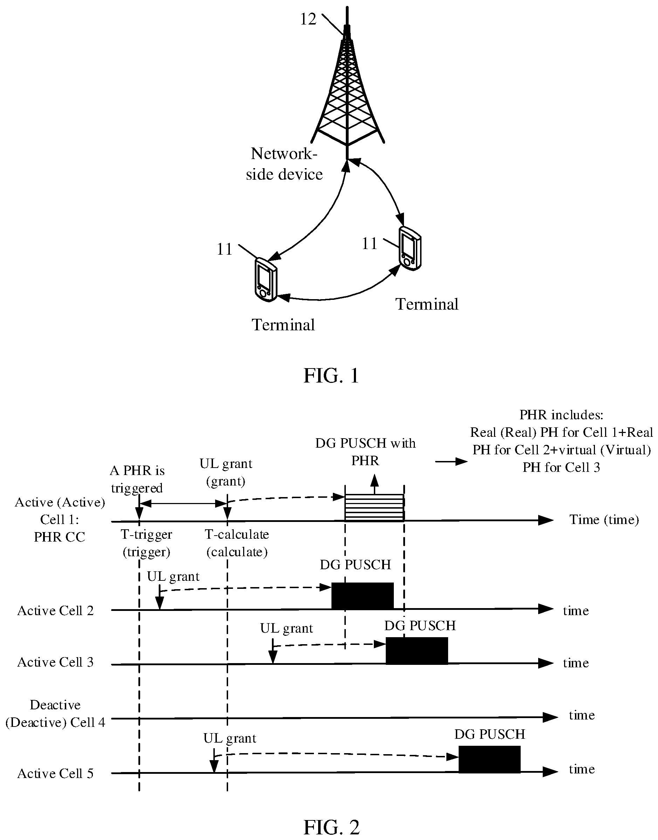

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that a same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only the core network device in the NR system is used as an example for description, and a specific type of the core network device is not limited.

To facilitate clearer understanding of the embodiments of this application, the following first describes some related background technical knowledge.

I. Definition of a terminal power class

As telecommunications evolves towards next generations and new use cases, 3GPP adds new terminal power classes. According to this definition, a UE terminal power class may be defined as a maximum transmit power on a new radio (New Radio, NR) channel bandwidth. Because of low transmit (TX) power from UE, a link budget is always uplink-limited and a cell range is defined. When having a high power, the UE may make a call from a further distance. 5G NR operates in frequency ranges FR1 and FR2, and 3GPP defines terminal power classes for the two.

(1) 3GPP technical specification (TS) 38.101-1 specifies a terminal power class for FR1 and 3GPP TS 38.101-2 specifies a terminal power class for FR2.
(2) A wired measurement is used to specify the UE power class in the frequency range FR1.
(3) For the frequency range FR2, the UE power class is specified by using an over-the-air (OTA) measurement.

For FR1, the UE power class (Power Class) is defined in Table 1.

**Table 1. Definition of UE power class**

| NR band (band) | Class 1 (dBm) | Tolerance (Tolerance) (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | 26 | +2/-3 | 23 | $\pm2$ |
| n2 | | | | | | | 23 | $\pm2$[3] |
| n3 | | | | | 26 | +2/-3[3] | 23 | $\pm2$[3] |
| n5 | | | | | | | 23 | $\pm2$ |
| n7 | | | | | | | 23 | $\pm2$[3] |
| n8 | | | | | | | 23 | $\pm2$[3] |
| n12 | | | | | | | 23 | $\pm2$[3] |
| n13 | | | | | | | 23 | $\pm2$ |
| n14 | 31[6] | +2/-3 | | | | | 23 | $\pm2$ |
| n18 | | | | | | | 23 | $\pm2$ |
| n20 | | | | | | | 23 | $\pm2$[3] |
| n24 | | | | | | | 23 | +2/-3[3] |
| n25 | | | | | | | 23 | $\pm2$[3] |
| n26 | | | | | | | 23 | $\pm2$[3] |
| n28 | | | | | | | 23 | +2/-2.5 |
| n30 | | | | | | | 23 | $\pm2$ |
| n34 | | | 29[5] | +2/-3 | 26 | +2/-3 | 23 | $\pm2$ |
| n38 | | | | | | | 23 | $\pm2$ |
| n39 | | | | | 26 | +2/-3 | 23 | $\pm2$ |
| n40 | | | 29[5] | +2/-3 | 26 | +2/-3 | 23 | $\pm2$ |
| n41 | | | 29[5] | +2/-3[3] | 26 | +2/-3[3] | 23 | $\pm2$[3] |
| n47 | | | | | | | 23 | $\pm2$ |
| n48 | | | | | | | 23 | +2/-3 |
| n50 | | | | | | | 23 | $\pm2$ |
| n51 | | | | | | | 23 | $\pm2$ |
| n53 | | | | | | | 23 | $\pm2$ |
| n54 | | | | | | | 23 | $\pm2$ |
| n65 | | | | | | | 23 | $\pm2$ |
| n66 | | | | | | | 23 | $\pm2$ |
| n70 | | | | | | | 23 | $\pm2$ |
| n71 | 31[6] | +2/-3 | | | | | 23 | +2/-2.5 |
| n74 | | | | | | | 23 | $\pm2$ |
| n77 | 31[6] | +2/-3 | 29[5] | +2/-3 | 26 | +2/-3 | 23 | +2/-3 |
| n78 | | | 29[5] | +2/-3 | 26 | +2/-3 | 23 | +2/-3 |
| n79 | | | 29[5] | +2/-3 | 26 | +2/-3 | 23 | +2/-3 |
| n80 | | | | | 26 | +2/-3[3] | 23 | $\pm2$[3] |
| n81 | | | | | | | 23 | $\pm2$ |
| n82 | | | | | | | 23 | $\pm2$ |

(continued)

| NR band (band) | Class 1 (dBm) | Tolerance (Tolerance) (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n83 | | | | | | | 23 | +2/-2.5 |
| n84 | | | | | 26 | +2/-3 | 23 | ±2 |
| n85 | 31[6] | +2/-3 | | | | | 23 | ±2[3] |
| n86 | | | | | | | 23 | ±2 |
| n89 | | | | | | | 23 | ±2 |
| n91 | | | | | | | 23 | ±2[3, 4] |
| n92 | | | | | | | 23 | ±2[3, 4] |
| n93 | | | | | | | 23 | ±2[3, 4] |
| n94 | | | | | | | 23 | ±2[3, 4] |
| n95 | | | | | 26 | +2/-3 | 23 | ±2 |
| n97 | | | | | 26 | +2/-3 | 23 | ±2 |
| n98 | | | | | 26 | +2/-3 | 23 | ±2 |
| n99 | | | | | | | 23 | +2/-3[3] |
| n100 | 31[6] | | | | | | 23 | ±2 |
| n101 | 31[6] | | | | | | 23 | ±2 |
| n104 | | | | | 26 | +2/-3 | 23 | +2/-3 |
| n105 | | | | | | | 23 | +2/-2.5 |

Note 1: $P_{PowerClass}$ is a maximum UE power specified without considering a tolerance.

Note 2: Unless otherwise noted, a power class 3 is a default power class.

Note 3: A transmission bandwidth is limited in a range of FUL_low and FUL_low+4 Mhz, or FUL_high-4 Mhz and FUL_high. A maximum output power requirement is relaxed by reducing a low tolerance limit by 1.5 dB.

Note 4: A maximum output power requirement is relaxed by reducing a low tolerance limit by 0.3 dB.

Note 5: It is implemented through dual transmit power.

Note 6: Generally speaking, a terminal power class 1 is not specific to a form factor of a smartphone. A requirement for a terminal power class 1 in a band n14 is applicable only to a public safety scenario.

In an FR1 band, when a terminal power class fallback condition is met, a terminal uses the power class 3.

For FR2, 3GPP TS 38.101-2 specifies a plurality of terminal power classes, namely, power classes 1, 2, 3, 4, 5, 6, and 7. Each terminal power class corresponds to a specified use scenario and application. The power class 3 is a default power class.

**Table 2 (Table 6.2.1.0-1 of 38.101-2). Terminal type assumption**

| Terminal power class | Terminal type |
|---|---|
| 1 | Fixed wireless access terminal |
| 2 | In-vehicle terminal |
| 3 | Handheld terminal |
| 4 | High-power non-handheld terminal |
| 5 | Fixed wireless access terminal |
| 6 | Terminal installed on a roof of a high-speed train |
| 7 | Terminal being capability-reduced |
| Note: This does not preclude a variant of a terminal not being capability-reduced | |

For FR2 UE, a maximum equivalent isotropically radiated power (Equivalent Isotropically Radiated Power, EIRP) limitation is introduced to meet regulatory requirements. In other words, it is ensured that a device does not transmit high power that may cause a health problem or cause excessive interference. For the maximum EIRP, a maximum antenna gain that may be generated by the device is considered. For example, a maximum EIRP of a terminal of the power class 2 is specified as 43 decibel-milliwatts (dBm), and a maximum EIRP of a device of the power class 1 in most FR2 bands is specified as 55 dBm.

In addition, a protocol also introduces a minimum peak EIRP and a total radiated power (Total Radiated Power, TRP) requirement. The minimum peak EIRP is used to ensure that the device can generate at least minimum output power in a particular direction. The total radiated power (TRP) is another requirement for the UE, which defines an upper limit of the total radiated power in all directions.

II. Power class-related capability of UE

The UE needs to report a power class capability and a maximum uplink duty cycle (duty cycle) capability. For the FR1, the UE may not report a power class only in a case that only the default power class (default power class) is supported.

III. Power headroom report (Power Headroom Report, PHR) reporting

The PHR means that a difference between uplink transmit power and maximum transmit power of the UE is reported to a generation NodeB (gNB), thereby helping the gNB to perform power control and resource scheduling on uplink transmission of the UE. Radio resource control (RRC) is configured with timers of a phr-periodic timer (phr-PeriodicTimer) and a phr-prohibit timer (phr-ProhibitTimer), and a parameter of a phr-tx-power factor change (phr-Tx-PowerFactorChange), to control a PHR process.

Trigger conditions of the power headroom report (PHR) are as follows:

(a) When the UE has an uplink resource for transmitting new data, phr-ProhibitTimer expires or has expired, and after previous transmitting of the power headroom report, a change value of a path loss exceeds a dB value of the configured phr-Tx-PowerFactorChange;
(b) phr-PeriodicTimer expires;
(c) a PHR function or parameter is configured or reconfigured at an RRC layer, and this configuration or reconfiguration is not an operation of disabling the PHR;
(d) a secondary cell (Secondary Cell, SCell) that has configured uplink (configured uplink) and that is of any medium access control (Medium Access Control, MAC) entity is activated;
(e) a secondary cell group (Secondary Cell Group, SCG) is activated;
(f) a primary secondary cell group cell (Primary SCG Cell, PSCell) is added;
(g) when the UE has an uplink resource for transmitting new data, phr-ProhibitTimer expires or has expired, a power fallback change amount corresponding to an uplink carrier exceeds a dB value of the configured phr-Tx-PowerFactorChange;
(h) when an active bandwidth part (Bandwidth Part, BWP) of an SCell of any MAC entity with configured uplink (configured uplink) is switched from a sleep BWP to a non-sleep DL BWP; and
(i) when the UE is configured with a maximum permissible exposure (Maximum Permissible Exposure, MPE)-report (Reporting)-FR2, and a timer of mpe-ProhibitTimer is not running (running), and the following conditions are met (PHR reporting in this case is also referred to as an 'MPE P-MPR report'):

ii. a maximum allowed UE output power reduction (Maximum allowed UE output Power Reduction, P-MPR) as specified in TS 38.101-2[15] that is used for a measurement meeting an FR2 MPE requirement is larger than or equal to a maximum allowed UE output power reduction threshold (mpr-threshold) of at least one activated FR2 serving cell since last transmission of a PHR in the MAC entity; or

iii. since last transmission of a PHR, for a P-MPR as specified in TS 38.101-2[15] that is used for a measurement meeting an FR2 MPE requirement, for at least one activated FR2 serving cell, because a P-MPR that is used for a measurement meeting an MPE requirement is larger than or equal to a maximum permissible exposure threshold (mpe-threshold) in the MAC entity, the P-MPR has a change exceeding phr-Tx-PowerFactorChange dB.

After the PHR is triggered, a MAC layer generates a PHR MAC-CE (with a single entity (single entry) or a plurality of entities (multiple entries)), and packages the PHR MAC-CE to a multi-access protocol data unit (Multi-Access PDU, MAC PDU) for sending to a physical layer. Then, the MAC layer starts or restarts phr-PeriodicTimer and phr-ProhibitTimer, and cancels a triggered PHR. In other words, the MAC entity is considered to complete processing this PHR triggering. If there is an uplink transmission license, the UE generates the PHR MAC-CE. In a process of generating the MAC PDU, the UE packages the PHR MAC-CE into the MAC PDU. The MAC PDU is sent to the physical layer, and after channel coding is performed on the physical layer, is mapped to a physical uplink shared channel (Physical Uplink Shared Channel, PUSCH) for sending. When receiving this MAC PDU, the gNB separates the PHR MAC-CE from the MAC PDU.

A power headroom (PH) is a difference between maximum transmit power allowed by the terminal (UE) and currently evaluated PUSCH transmit power. The power headroom represents how much transmit power the UE can use in addition to transmit power currently used for PUSCH transmission. A network-side device selects a quantity of scheduled time-frequency blocks, a modulation format, and the like based on a power headroom reported by the UE. The power headroom (PH) is classified into a real value (real PH) and a virtual value (virtual PH). The real value is calculated based on transmission parameters actually allocated by the network-side device, for example, a physical resource and a power compensation factor. The virtual value is a power headroom calculated based on a pre-defined transmission parameter. In an existing specification, if the UE triggers PHR reporting and a sending condition is met, the UE needs to send the PHR in a MAC-CE (control element) format. Whether a real PH or a virtual PH is sent on each component carrier (Component Carrier, CC)/cell depends on the following factors. In the following, a PUSCH carrying PHR is referred to as PUSCH with PHR, and a CC in which PUSCH with PHR is located is referred to as a PHR CC.

(1) Whether PUSCH transmission exists on another activated (activated) CC, and whether time domain resources occupied by PUSCH with PHR transmitted on the PUSCH and the PHR CC overlap; and if there is no overlapping, a PH for this activated CC is a virtual PH or no PH is sent;

(2) the PH is for a configured grant (Configured Grant, CG) or dynamic grant (Dynamic Grant DG) PUSCH;

(3) time (T-calculate) for calculating the PH is determined; and if related scheduling information is obtained from PHR trigger time T-trigger to T-calculate, the power headroom is the real PH; or otherwise, the virtual PH is reported;

(3-1) if the PHR is transmitted on the DG PUSCH, this T-calculate is time of receiving a UL grant; or

(3-2) if the PHR is transmitted on the CG PUSCH, this T-calculate is obtained by subtracting $T'_{proc,2}$ from time at which a start symbol for sending the CG PUSCH is located, where $T'_{proc,2} = T_{proc,2}$, and $T_{proc,2}$ is PUSCH preparation time, which is defined in TS 38.214, and a value thereof depends on a data processing capability of the terminal.

FIG. 2 is a schematic diagram of PHR transmission on a DG PUSCH according to the prior art. Cell 4 is a deactivate CC, and there is no PH for Cell 4. A PUSCH of Cell 5 has no resource overlapping with PUSCH with PHR in terms of time, and therefore, there is no PHR of Cell 5. There is only PHR of Real PH for Cell 1, Real PH for Cell 2 and Virtual PH for Cell 3.

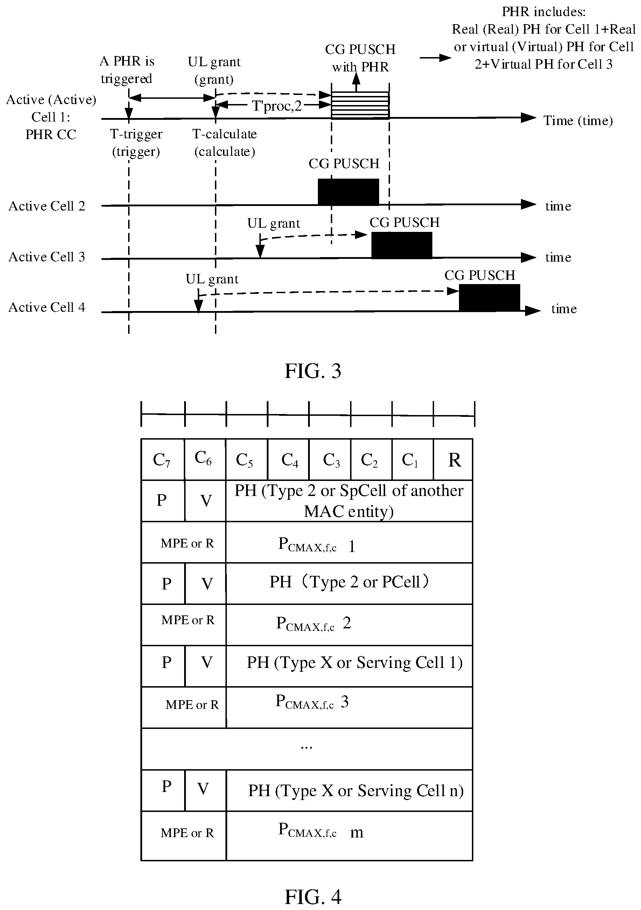

FIG. 3 is a schematic diagram of PHR transmission on a CG PUSCH according to the prior art. The UE determines whether a PH for Cell 2 on the CG PUSCH is a Real PH or a Virtual PH. A PUSCH of Cell 4 has no resource overlapping with PUSCH with PHR in terms of time, and therefore, there is no PHR of Cell 4.

The PHR is transmitted on a medium access control (Medium Access Control, MAC)-control element (Control Element, CE). FIG. 4 is a schematic diagram of a format of a multi-entity PHR MAC-CE according to the prior art. As shown in FIG. 4,

$C_i$ field: indicates a PH field of an ith CC. The $C_i$ field set to 1 indicates that a PH field of a serving cell with a CC/serving cell index (ServCellIndex) i is reported. The $C_i$ field set to 0 indicates that a PH field of a serving cell with a ServCellIndex i is not reported.

R field: indicates a reserved bit, which is set to 0.

V field: indicates whether a PH value is based on actual transmission or a reference format. For a type-1 PH, the V field set to 0 indicates that actual transmission is performed on a PUSCH, and the V field set to 1 indicates that a PUSCH reference format is used. For a type-2 PH, the V field set to 0 indicates that actual transmission is performed on a PUCCH, and the V field set to 1 indicates that a PUCCH reference format is used. For a type-3 PH, the V field set to 0 indicates that actual transmission is performed on a sounding reference signal (Sounding Reference Signal, SRS), and the V field set to 1 indicates that an SRS reference format is used. In addition, for the type-1 PH, the type-2 PH, and the type-3 PH, setting the V field to 0 indicates that an octet containing an associated $P_{CMAX,f,c}$ field is present, and setting the V field to 1 indicates that an octet containing an associated $P_{CMAX,f,c}$ field is omitted.

Power headroom (PH) field: This field indicates a power headroom level.

$P_{CMAX,f,c}$ field: If a $P_{CMAX,f,c}$ field is present, this field indicates $P_{CMAX,f,c}$ (as specified in TS 38.213) for an NR serving cell and $P_{CMAX,c}$ or $\bar{P}_{CMAX,f,c}$ (as specified in TS 36.213) for an evolved universal mobile telecommunications system (Universal Mobile Telecommunications System, UMTS) evolved-universal terrestrial radio access (Evolved-Universal Terrestrial Radio Access E-UTRA) serving cell used to calculate the previous PH field. For a reported $P_{CMAX,f,c}$

and a nominal transmit power level of corresponding UE, for example, a nominal UE transmit power level for PHR (Nominal UE transmit power level for PHR) in a remaining power report shown in Table 3 (Table 6.1.3.8-2 of 38.321), a corresponding measurement value (in a unit of dBm) of the NR serving cell is specified in TS 38.133, and a corresponding measurement value (dBm) of the E-UTRA serving cell is specified in TS 36.133.

**Table 3. Nominal UE transmit power level in a remaining power report**

| UE output power ($P_{CMAX,f,c}$) | Nominal UE transmit power level (Nominal UE transmit power level) |
|---|---|
| 0 | PCMAX_C_00 |
| 1 | PCMAX_C_01 |
| 2 | PCMAX_C_02 |
| ... | ... |
| 61 | PCMAX_C_61 |
| 62 | PCMAX_C_62 |
| 63 | PCMAX_C_63 |

Maximum permissible exposure (Maximum Permissible Exposure, MPE): If mpe-Reporting-FR2 is configured, a serving cell operates on an FR2. In addition, if a P field is set to 1, the field indicates that applied power falls back to meet an MPE requirement, as specified in TS 38.101-2. This field represents an index of Table 4 (Table 6.1.3.8-3 of 38.321). A corresponding measurement value that is of a P-MPR level and that is in a unit of dB is specified in TS 38.133, and a length of the field is 2 bits. If no mpe-Reporting-FR2 is configured, or if a serving cell operates on an FR1, or if a P field is set to 0, R bits are present instead.

**Table 4. Measured MPE P-MPR value**

| Maximum permissible exposure (MPE) | Measured P-MPR value (Measured P-MPR value) |
|---|---|
| 0 | P-MPR_00 |
| 1 | P-MPR_01 |
| 2 | P-MPR_02 |
| 3 | P-MPR_03 |

IV. Definition and report of a delta power class

For an FR1, UE may set maximum output power configured by the UE. The protocol specifies upper and lower limits of the maximum output power configured by the UE, and one of factors is delta power class $\Delta P_{PowerClass}$.
In NR Rel-18, RAN4 determines that the UE is supported to report the delta power class $\Delta P_{PowerClass}$.

V. Reporting and configuration of a UE full power (full power) capability

From 3GPP Rel-16, an NR introduces a UE UL full power mode for uplink transmission. Based on a UL full power mode capability reported by the UE, a network configures signaling to indicate which UL full power mode the UE should use. There are three uplink full power modes in total. Different uplink full power modes affect determining of uplink precoding information and a quantity of layers by the UE.
A power class-related information reporting method provided in embodiments of this application is described in detail below with reference to the accompanying drawing by using some embodiments and application scenarios thereof.
The power class-related information reporting method provided in the embodiments of this application may be applied to a scenario in which a terminal reports power class-related information. The terminal determines the power class-related information. In a case that a first condition is met, the terminal can report the power class-related information to a network-side device in a timely manner because the first condition is a trigger condition for reporting the power class-related information, thereby implementing timely reporting of the power class-related information.

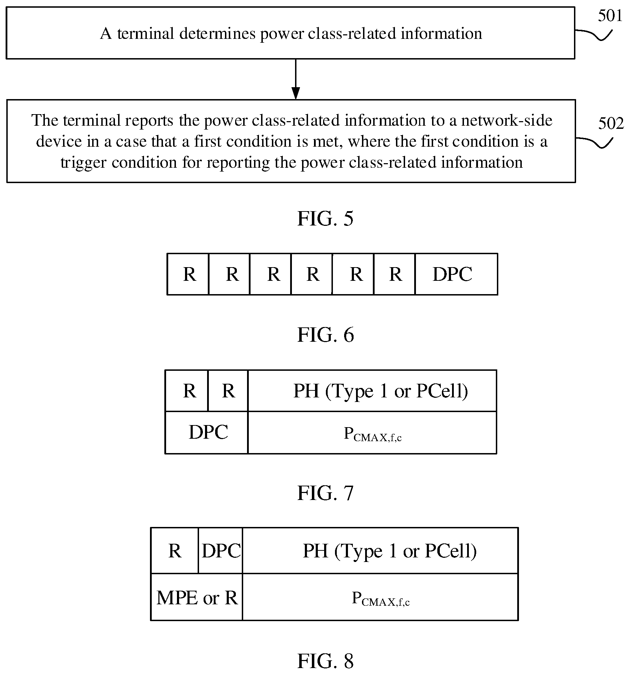

FIG. 5 is a schematic flowchart of a power class-related information reporting method according to an embodiment of this application. As shown in FIG. 5, the method includes steps 501 and 502.
Step 501: A terminal determines power class-related information.

Step 502: The terminal reports the power class-related information to a network-side device in a case that a first condition is met, where the first condition is a trigger condition for reporting the power class-related information.

It should be noted that this embodiment of this application may be applied to a scenario in which the terminal reports the power class-related information. The terminal and the network-side device include not limited to the types of the terminal 11 and the network-side device 12 listed above. This is not limited in this embodiment of this application. The terminal has a power class-related information reporting capability, and the network-side device supports a power class-related information function.

Specifically, the first condition is the trigger condition for reporting the power class-related information, and the power class-related information includes at least one of the following: a delta power class (Delta Power Class, DPC); and an uplink full power transmission capability corresponding to a power class. The delta power class may also be referred to as Delta PC ($\Delta P_{PowerClass}$) or DPC.

Optionally, the DPC includes at least one of the following:

(1) First indication information, used to indicate a value of the DPC, where the first indication information is bit information with a preset length.

Specifically, the value of the DPC may be a possible value in the $\Delta P_{PowerClass}$ defined in an existing protocol, or the value of the DPC may be a group of values, and a step of the group of values may not be equal to 3 dB. In this case, the value of the DPC may be allowed to be less than maximum power corresponding to an actual power class, thereby improving configuration flexibility of the DPC. The first indication information is the bit information of the preset length, for example, the first indication information is a field of 2 bits (bit), or may be a field of 3 bits. When the first indication information is the field of 2 bits, {00, 01, 10, 11} may be respectively used to indicate corresponding values in {0 dB, 3 dB, 6 dB, reserved (reserved)}. When the first indication information is the field of 3 bits, {000, 001, 010, 011, 100, 101, 110, 111} may be respectively used to indicate corresponding values in {0 dB, 2 dB, 3 dB, 4 dB, 6 dB, 8 dB, 9 dB, reserved}.

(2) Second indication information, used to indicate whether a power class of the terminal falls back.

Specifically, the second indication information is a flag (flag), and is used to indicate whether the power class of the terminal falls back. In this case, a specific amount of fallback in dB does not need to be indicated, thereby reducing signaling overheads. For example, one bit is used for indicating, a bit 0 indicates that there is no power class fallback, and a bit 1 indicates that there is power class fallback. Alternatively, 2 bits are used for representation, but the specific amount of fallback in dB is not indicated. For example, {00, 01, 10, 11} respectively indicates corresponding values in {no power class fallback, power class fallback, power class increase, reserved}. Alternatively, 1 bit is used for indicating, a bit 0 indicates that there is power class fallback, and a bit 1 indicates that there is a power class increase.

Optionally, reporting the uplink full power transmission capability corresponding to the power class includes any one of the following:

(a) The terminal reports UL full power transmission capabilities corresponding to all supported power classes.

Specifically, for a terminal supporting DPC reporting, the terminal may report UL full power transmission capabilities corresponding to all supported power classes, so that the network-side device knows UL full power transmission capabilities corresponding to different power classes, and can configure different UL full power modes for the terminal.

For example, the terminal may independently report a UL full power transmission capability for each (per) power class. UL full power modes corresponding to the different power classes may be configured independently.

(b) The terminal reports the UL full power transmission capability together with the DPC.

Specifically, for the terminal supporting DPC reporting, the terminal may report the UL full power transmission capability together with the DPC, thereby reducing resource overheads. For example, the terminal may dynamically report a UL full power mode corresponding to a fallback (fallback) power class.

The terminal may determine the power class-related information, and the terminal may report the power class-related information to the network-side device in the case that the first condition is met.

According to the power class-related information reporting method provided in this embodiment of this application, the terminal determines the power class-related information. In the case that the first condition is met, the terminal can report the power class-related information to the network-side device in a timely manner because the first condition is the trigger condition for reporting the power class-related information, thereby implementing timely reporting of the power class-related information.

Optionally, the first condition includes at least one of the following:

(1) A trigger condition of a power headroom report PHR.

Specifically, a trigger condition of DPC reporting is a trigger condition of the PHR, the terminal has a DPC reporting capability, and the network-side device supports a DPC function. For example, the network-side device configures a DPC enable (enable)/disable (disable) parameter to determine whether DPC reporting is supported. When the terminal supports a DPC reporting function and a condition for triggering PHR reporting is met, the terminal reports a DPC to the network-side device, and the DPC is a DPC used for sending uplink transmission of a PHR.

(2) A delta power class DPC used for current uplink transmission is different from a reference DPC.

Specifically, DPC reporting depends on a difference between the DPC used for the current uplink transmission and the reference DPC, namely, a change of the DPC used for the current uplink transmission.

Optionally, the reference DPC includes any one of the following:

(a) a DPC used for last uplink transmission; and
(b) a DPC corresponding to a plurality of times of previous uplink transmission.

(3) A difference between a DPC used for current uplink transmission and a reference DPC is greater than or equal to a first threshold.

Specifically, when the difference between the DPC used for the current uplink transmission and the reference DPC is greater than or equal to the first threshold, the terminal reports the DPC to the network-side device. To be specific, when the difference between the DPC used for the current uplink transmission and the reference DPC is greater than the first threshold, the terminal may report the DPC to the network-side device. Alternatively, when the difference between the DPC used in the current uplink transmission and the reference DPC is equal to the first threshold, the terminal may also report the DPC to the network-side device. The first threshold may be determined based on a network configuration or a protocol predefinition.

For example, the first threshold is 3 dB. When the difference between the DPC used for the current uplink transmission and the reference DPC is greater than or equal to 3 dB, the terminal reports the DPC to the network-side device.

(4) A difference between a DPC used for current uplink transmission and a reference DPC is less than or equal to a second threshold.

Specifically, when the difference between the DPC used for the current uplink transmission and the reference DPC is less than or equal to the second threshold, the terminal reports the DPC to the network-side device. To be specific, when the difference between the DPC used for the current uplink transmission and the reference DPC is less than the second threshold, the terminal may report the DPC to the network-side device. Alternatively, when the difference between the DPC used in the current uplink transmission and the reference DPC is equal to the second threshold, the terminal may also report the DPC to the network-side device. The second threshold may be determined based on a network configuration or a protocol predefinition. The first threshold and the second threshold may be the same, or may be different.

For example, the second threshold is 6 dB. When the difference between the DPC used for the current uplink transmission and the reference DPC is less than or equal to 6 dB, the terminal reports the DPC to the network-side device.

(5) An actual power class of the terminal is different from a reference Power Class.

Specifically, DPC reporting depends on a difference between the actual power class of the terminal and the reference Power Class, that is, the actual Power Class of the terminal changes. For example, when the actual Power Class of the terminal changes, the terminal reports a DPC to the network-side device.

(6) An actual Power Class of the terminal is different from a reference Power Class, and a timer corresponding to the Power Class of the terminal expires.

Specifically, after the actual Power Class of the terminal is different from the reference Power Class, and the timer corresponding to the Power Class of the terminal expires, the terminal reports a DPC to the network-side device. In other words, the DPC is reported only after the actual Power Class of the terminal changes and the timer corresponding to the Power Class of the terminal expires. The timer corresponding to the Power Class may be a DPC timer (delta_power_class_timer). When the actual Power Class of the terminal changes, the DPC timer starts. After the DPC timer expires, the terminal reports the DPC to the network-side device. Duration of the timer may be determined based on a network configuration or a protocol predefinition.

(7) A DPC used for current uplink transmission is greater than or equal to a third threshold.

Specifically, DPC reporting depends on that the DPC used for the current uplink transmission is greater than or equal to the third threshold, that is, depends on a magnitude of the DPC. The third threshold may be determined based on a network configuration or a protocol predefinition. When the DPC used for the current uplink transmission is greater than the third threshold, the terminal may report the DPC to the network-side device. Alternatively, when the DPC used for the current uplink transmission is equal to the third threshold, the terminal may also report the DPC to the network-side device.

For example, the third threshold is 3 dB. When the DPC used for the current uplink transmission is greater than or equal to 3 dB, the terminal reports the DPC to the network-side device.

(8) A DPC used for current uplink transmission is less than or equal to a fourth threshold.

Specifically, when the DPC used for the current uplink transmission is less than or equal to the fourth threshold, the terminal reports the DPC to the network-side device. To be specific, when the DPC used for the current uplink transmission is less than the fourth threshold, the terminal may report the DPC to the network-side device. Alternatively, when the DPC used for the current uplink transmission is equal to the fourth threshold, the terminal may also report the DPC to the network-side device. The fourth threshold may be determined based on a network configuration or a protocol predefinition. The third threshold and the fourth threshold may be the same, or may be different.

For example, the fourth threshold is 8 dB. When the DPC used for the current uplink transmission is less than or equal to 8 dB, the terminal reports the DPC to the network-side device.

(9) An uplink beam used for current uplink transmission is different from an uplink beam used for last uplink transmission or uplink beams used for a plurality of times of previous uplink transmission.

Specifically, DPC reporting depends on a difference between the uplink beam used for the current uplink transmission and the uplink beam used for the last uplink transmission or the plurality of times of previous uplink transmission, namely, a change of the uplink beam.

The change of the uplink beam may be the difference between the uplink beam used for the current uplink transmission and the uplink beam used for the last uplink transmission. For example, when an uplink beam used for current PUSCH transmission changes compared to the beam used for the last uplink transmission, the terminal needs to report, to the network-side device, the DPC used for the current uplink transmission.

The change of the uplink beam may also be the difference between the uplink beam used for the current uplink transmission and the uplink beam used for the plurality of times of previous uplink transmission. For example, when an uplink beam used for current PUSCH transmission changes compared to the beam used for the plurality of times of previous uplink transmission, the terminal needs to report, to the network-side device, the DPC used for the current uplink transmission.

(10) A transmission interval between current uplink transmission and last uplink transmission is greater than or equal to a fifth threshold.

It should be noted that when uplink transmission of the terminal is not very frequent, a difference between a DPC used for the current uplink transmission and a DPC used for the last uplink transmission does not necessarily need to be always saved on the network-side device or the terminal. In this case, the terminal may be required to report a latest DPC.

Specifically, when the transmission interval between the current uplink transmission and the last uplink transmission is greater than or equal to the fifth threshold, the terminal reports a DPC to the network-side device. To be specific, when the transmission interval between the current uplink transmission and the last uplink transmission is greater than the fifth threshold, the terminal may report the DPC to the network-side device. Alternatively, when the transmission interval between the current uplink transmission and the last uplink transmission is equal to the fifth threshold, the terminal may also report the DPC to the network-side device. The fifth threshold may be determined based on a network configuration or a protocol predefinition.

(11) A transmission interval between current uplink transmission and last uplink transmission is less than or equal to a sixth threshold.

Specifically, when the transmission interval between the current uplink transmission and the last uplink transmission is less than or equal to the sixth threshold, the terminal reports a DPC to the network-side device. To be specific, when the transmission interval between the current uplink transmission and the last uplink transmission is less than the sixth threshold, the terminal may report the DPC to the network-side device. Alternatively, when the transmission interval between the current uplink transmission and the last uplink transmission is equal to the sixth threshold, the terminal may also report the DPC to the network-side device. The sixth threshold may be determined based on a network configuration or a protocol predefinition. The fifth threshold and the sixth threshold may be the same, or may be different.

According to the power class-related information reporting method provided in this embodiment of this application, the terminal can adaptively report the power class-related information to the network-side device based on the first condition, and a necessity of adjusting the power class-related information, improving flexibility of reporting the power class-related information.

Optionally, the last uplink transmission or the plurality of times of previous uplink transmission are determined based on a first time window; and a length of the first time window is determined based on a network configuration or a protocol predefinition.

Specifically, end time of the first time window is time of the last uplink transmission, namely, a last symbol (symbol) of previous transmission. Start time of the first time window is determined by calculating the length of the first time window and the end time of the first time window. The length of the first time window may be determined based on a network configuration or a protocol predefinition.

For example, the DPC used for the last uplink transmission may be determined by a DPC used for a first time or a last time of uplink transmission in the first time window. The DPCs corresponding to the plurality of times of previous uplink transmission may be determined by a maximum value, a minimum value, or an average value of DPCs used for all uplink transmission in the first time window.

Optionally, the first time window is associated with a second time window; and the second time window includes at least one of the following:

(a) a PHR reporting period;
(b) a synchronization signal block (Synchronization Signal Block, SSB) period;
(c) a channel state information-reference signal (Channel State Information-Reference Signal, CSI-RS) period;
(d) a sounding reference signal (Sounding Reference Signal, SRS) period;
(e) an SSB to a physical random access channel (Physical Random Access Channel, PRACH) occasion association period;
(f) an SSB to a PRACH occasion association mode period; and
(g) a CG period corresponding to a physical uplink shared channel PUSCH scheduled by a configured grant (Configured Grant, CG).

Optionally, the DPCs corresponding to the plurality of times of previous uplink transmission may be determined based on all DPCs of the plurality of times of previous uplink transmission.

Optionally, the DPCs corresponding to the plurality of times of previous uplink transmission include any one of the following: an average value of all the DPCs of the plurality of times of previous uplink transmission; a weighted average of all the DPCs of the plurality of times of previous uplink transmission; and a median of all the DPCs of the plurality of times of previous uplink transmission.

Specifically, when the weighted average value of all the DPCs of the plurality of times of previous uplink transmission is determined, a weight may be determined by a time interval between all the DPCs of the plurality of times of previous uplink transmission and the DPC used for the current uplink transmission.

Optionally, in a case that the current uplink transmission is a first time of uplink transmission, the terminal determines, based on at least one of the following, that the DPC used for the current uplink transmission is different from the reference DPC:

(1) A preset value. Specifically, a difference existing between the DPC used for the current uplink transmission and the reference DPC is used to determine whether to report the DPC. In a case that the current uplink transmission is the first time of uplink transmission, the preset value may be preset as the difference existing between the DPC used for the current uplink transmission and the reference DPC. For example, the preset value is 0, that is, it is assumed that the DPC used for the last uplink transmission is the same as the DPC used for the current uplink transmission, and the difference existing between the DPC used for the current uplink transmission and the reference DPC is 0.
(2) The DPC used for the current uplink transmission. Specifically, a difference existing between the DPC used for the current uplink transmission and the reference DPC is the DPC used for the current uplink transmission, that is, the reference DPC is 0.
(3) A network configuration or a protocol predefinition.

Optionally, the current uplink transmission and the last uplink transmission meet at least one of the following:

(1) A same uplink transmission channel.

Specifically, the current uplink transmission and the last uplink transmission are on a same uplink transmission channel. For example, when a current uplink transmission channel corresponding to the DPC used for the current uplink transmission is for PUSCH transmission, uplink transmission corresponding to a DPC that is used for the last uplink transmission and that is used to calculate a DPC change must also be for PUSCH transmission.

(2) Different uplink transmission channels.

Specifically, the current uplink transmission and the last uplink transmission are on different uplink transmission channels. For example, when an uplink transmission channel corresponding to the DPC used for the current uplink transmission is for PUSCH transmission, uplink transmission corresponding to a DPC that is used for the last uplink transmission and that is used to calculate a DPC change may not be PUSCH transmission, for example, may be SRS transmission.

(3) Uplink transmission on a same carrier frequency.

Specifically, the current uplink transmission and the last uplink transmission are the uplink transmission on the same carrier frequency. For example, uplink transmission corresponding to the DPC used for the current uplink transmission is on a carrier frequency CC1, and uplink transmission corresponding to a DPC that is used for the last uplink transmission and that is used to calculate a DPC change must also be on the carrier frequency CC1.

(4) Uplink transmission on a same cell.

Specifically, the current uplink transmission and the last uplink transmission are the uplink transmission on the same cell.

(5) A same uplink beam.

Specifically, the current uplink transmission and the last uplink transmission use the same uplink beam. For example, when a current uplink transmission channel corresponding to the DPC used for the current uplink transmission is for PUSCH transmission, uplink transmission corresponding to a DPC that is used for the last uplink transmission and that is used to calculate a DPC change and current PUSCH transmission use a same spatial domain transmission filter (spatial domain transmission filter), namely, the same uplink beam.

Optionally, the terminal cancels reporting the power class-related information to the network-side device in a case that the network-side device learns of an actually assumed DPC used by the terminal.

Specifically, in some special scenarios, the network-side device learns of the actually assumed DPC used by the terminal. In the case that the network-side device learns of the actually assumed DPC used by the terminal, the DPC is with a fixed value, and the terminal may cancel reporting the power class-related information to the network-side device, that is, the terminal may not report the power class-related information to the network-side device, thereby reducing signaling overheads.

Optionally, that the network-side device learns of an actually assumed DPC used by the terminal includes at least one of the following:

(a) The terminal is configured with a supplementary uplink (Supplementary Uplink, SUL), and a requirement for a default power class of the terminal is applied to a band for which the terminal indicates a power class.

Specifically, when the terminal is configured with the SUL, and the requirement for the default power class of the terminal is applied, according to provisions of Section 6.2C.1 of Protocol 38.101-1, to the band for which the terminal indicates the power class, the terminal may cancel reporting the power class-related information to the network-side device.

(b) A terminal having a power class PC2 function with a transmit diversity txDiversity-r16 function or a terminal having a PC1.5 function indicates an SRS transmit channel switching TxSwitch function, and in a case that SRS transmission configured as antenna switching is used in an SRS resource set, an SRS resource configured in each SRS resource set consists of one SRS port.

Specifically, the terminal having the PC2 function with the txDiversity-r16 function or the terminal having a PC1.5 function indicates the SRS TxSwitch function ('t1r2', 'tlr4', 't1r1-t1r2', or 't1r1-t1r2-t1r2-t1r4'), and in the case that the SRS transmission configured as antenna switching is used in the SRS resource set, the SRS resource configured in each SRS resource set consists of one SRS port, the terminal may cancel reporting the power class-related information to the network-side device.

(c) Maximum power P-max indicated by the terminal with a PC2 function is less than or equal to a seventh threshold.

Specifically, when P-max indicated by the terminal with the PC2 function is less than or equal to the seventh threshold, the terminal may cancel reporting the power class-related information to the network-side device. For example, when the seventh threshold is 23 dB, and P-max indicated by the terminal with the PC2 function is less than or equal to 23 dBm, the terminal may cancel reporting the power class-related information to the network-side device.

(d) Maximum power P-max indicated by a terminal with a PC1.5 function is less than or equal to an eighth threshold.

Specifically, when P-max indicated by the terminal with the PC1.5 function is less than or equal to the eighth threshold, the terminal may cancel reporting the power class-related information to the network-side device. For example, when the eighth threshold is 26 dB, and P-max indicated by the terminal with the PC1.5 function is less than or equal to 26 dB, the terminal may cancel reporting the power class-related information to the network-side device.

Optionally, the reporting the power class-related information to a network-side device includes any one of the following:

(1) Reporting the power class-related information to the network-side device by using a first medium access control MAC-control element CE, where the first medium access control MAC-control element CE is a MAC-CE not for reporting the PHR.

Specifically, the first MAC-CE is the MAC-CE not for reporting the PHR, that is, the first MAC-CE is an extra-defined MAC-CE. The terminal reports the power class-related information to the network-side device by using the first MAC-CE.

When the power class-related information is a DPC, the DPC is reported in the first MAC-CE, and the DPC is identified by using a new logical channel identifier (Logical Channel Identity, LCID) or an extended logical channel identifier (extended Logical Channel Identity, eLCID).

For example, one DPC field is introduced in one first MAC-CE, and is located in two least significant bits (Least Significant Bit, LSB) of one byte (byte). As shown in FIG. 6, FIG. 6 is a schematic diagram of a format of a first MAC-CE according to an embodiment of this application.

(2) Reporting the power class-related information to the network-side device by using a second MAC-CE, where the second MAC-CE is a MAC-CE for reporting the PHR.

Specifically, the second MAC-CE is the MAC-CE for reporting the PHR, that is, the second MAC-CE is an existing MAC-CE, and reporting is implemented by modifying a definition of a related field. The terminal reports the power class-related information to the network-side device by using the second MAC-CE.

When the power class-related information is a DPC, the DPC is reported in the second MAC-CE, and reporting of the DPC is implemented by modifying the definition of the related field.

For example, a 2-bit DPC field is introduced in a second MAC-CE of a legacy PHR, and is located in first two most significant bits (Most Significant Bit, MSB) of a second byte. As shown in FIG. 7, FIG. 7 is a schematic diagram 1 of a format of a second MAC-CE according to an embodiment of this application.

For another example, a 1-bit DPC field is introduced in a second MAC-CE of a legacy PHR, and is located in a second bit of a first byte. As shown in FIG. 8, FIG. 8 is a second schematic diagram 2 of a format of a second MAC-CE according to an embodiment of this application.

(3) Reporting the power class-related information to the network-side device based on a form of each beam or that each beam group corresponds to one DPC.

Specifically, the terminal reports the power class-related information to the network-side device based on each beam or in the form that each beam group corresponds to one DPC. When the power class-related information is a DPC, the DPC is reported to the network-side device based on each beam or in the form that each beam group corresponds to one DPC.

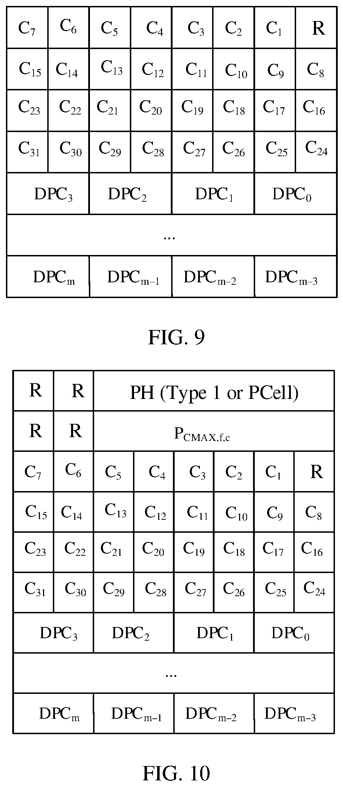

For example, reporting of the DPC is implemented through independent reporting for each beam. As shown in FIG. 9, FIG. 9 is a schematic diagram 1 of reporting a DPC based on each beam according to an embodiment of this application. $DPC_m$ represents a DPC value corresponding to a beam corresponding to an mth reporting DPC, and $C_i$ represents whether a DPC corresponding to an SSB i is reported.

For another example, reporting of the DPC is implemented through reporting for each beam together with reporting of the legacy PHR. As shown in FIG. 10, FIG. 10 is a schematic diagram 2 of reporting a DPC based on each beam according to an embodiment of this application. $DPC_m$ represents a DPC value corresponding to a beam corresponding to an mth reporting DPC, and $C_i$ represents whether a DPC corresponding to an SSB i is reported.

(4) Reporting the power class-related information to the network-side device based on a form of each serving cell or that each serving cell group corresponds to one DPC.

Specifically, the power class-related information is reported to the network-side device based on each serving cell or in the form that each serving cell group corresponds to one DPC. When the power class-related information is a DPC, the DPC is reported to the network-side device based on each serving cell or in the form that each serving cell group corresponds to one DPC.

For example, reporting of the DPC is implemented through independent reporting of each serving cell. A schematic diagram of reporting a DPC based on each serving cell is the same as the schematic diagram of reporting a DPC based on each beam shown in FIG. 9. $DPC_m$ represents a DPC value corresponding to a serving cell corresponding to an mth reporting DPC, and $C_i$ represents whether a DPC corresponding to a serving cell i is reported.

For another example, reporting of the DPC is implemented through reporting of each serving cell together with reporting of the legacy PHR. A schematic diagram of reporting a DPC based on each serving cell is the same as the schematic diagram of reporting a DPC based on each beam shown in FIG. 10. $DPC_m$ represents a DPC value corresponding to a serving cell corresponding to an mth reporting DPC, and $C_i$ represents whether a DPC corresponding to a serving cell i is reported.

In this embodiment of this application, the terminal reports the power class-related information to the network-side device by using the first MAC-CE, the second MAC-CE, based on each beam or in the form that each beam group corresponds to one DPC, or based on each serving cell or in the form that each serving cell group corresponds to one DPC, thereby reducing reported signaling overheads and improving reporting flexibility, so that the network-side device can flexibly adjust resource scheduling of the terminal based on the power class-related information reported by the terminal.

Optionally, the serving cell group meets at least one of the following:

(a) all intra-band serving cells are treated as one serving cell group;
(b) all intra-frequency serving cells are treated as one serving cell group; and
(c) a network configuration or a protocol predefinition.

Specifically, all serving cells are numbered based on serving cell IDs, a group size is defined to determine a quantity of groups, and serving cells in each group of serving cells are determined based on orders of cell IDs.

Optionally, reporting of the DPC includes periodic reporting or aperiodic reporting.

For example, in a preset period which is configured by the network-side device for the terminal, the terminal may report the DPC only if the first condition is met.

Optionally, the aperiodic reporting meets at least one of the following:

(1) a downlink control information (Downlink Control Information, DCI) activation or indication;
(2) a MAC-CE activation or indication; and
(3) timer (timer) triggering. For example, when the DPC is reported, a timer starts (start). If the timer expires (expire), the DPC is reported when the timer starts again.

For example, when the network-side device enables DPC reporting, the terminal has a DPC reporting capability, and the first condition is met, the terminal aperiodically (dynamically) reports the DPC. The network-side device may introduce a bit in DCI scheduling uplink transmission, to indicate whether to report the DPC. Alternatively, the network-side device indicates DPC reporting in a MAC-CE, and the terminal may indicate a used DPC in first time of uplink transmission after the MAC-CE.

Optionally, the terminal determines effective time of a new power class after reporting the DPC.

It should be noted that for a full power capability of a terminal, the capability may be different for terminals of different power classes. In this case, a relationship between a full power capability of a terminal and a power class of the terminal needs to be considered. To enable the network-side device to know UL full power modes corresponding to different power classes, different UL full power modes may be configured for the terminal. In addition, the network-side device and the terminal may have a same assumption about precoding (precoding) information and a quantity of layers (layer) used for uplink transmission. The network-side device and the terminal need to have a unified understanding of effective time of a DPC. After the DPC is reported or a new power class assumption takes effect, the terminal needs to determine a UL full power mode corresponding to the new power class.

Specifically, the new power class includes a fallback power class, an increased power class, or a restored power class. After reporting the DPC, the terminal may determine the effective time of the new power class.

In this embodiment of this application, after reporting the DPC, the terminal determines the effective time of the new power class, so that the network-side device can configure the uplink full power mode corresponding to the new power class for the terminal, to implement flexible adjustment on resource scheduling of the terminal. Therefore, the terminal is enabled to use the corresponding uplink full power mode, and the network-side device and the terminal have the same assumption about the precoding information and the quantity of layers used for the uplink transmission.

Optionally, the determining effective time of a new power class includes at least one of the following:

(1) Determining the effective time of the new power class by using a time offset.

Specifically, after sending on a PUSCH reporting the DPC, the time offset (time offset) is introduced to determine the effective time of the new power class by using the time offset.

Optionally, the time offset is determined based on a network configuration (for example, in a unit of slot (slot) or symbol), a protocol predefinition, or a target factor; and the target factor includes PUSCH processing time or MAC processing time.

(2) Determining the effective time of the new power class by using a network activation or indication.

Specifically, after reporting the DPC, the terminal may determine the effective time of the new power class by using the network activation or indication. For example, after the DPC is reported, the network-side device indicates, by using a MAC-CE or DCI, whether to use the new power class. Therefore, the effective time of the new power class can be determined, to use the UL full power mode corresponding to the new power class.

(3) Determining the effective time of the new power class by using a network deactivation or indication.

Specifically, after reporting the DPC, the terminal may determine the effective time of the new power class by using the network deactivation or indication. For example, after the DPC is reported, and after the network-side device activates the new power class by using a MAC-CE, the network-side device may further indicate, by using another MAC-CE or DCI, that the new power class is invalid. In other words, the terminal needs to use a restored power class, and may determine effective time of the restored power class, to use a UL full power mode corresponding to the restored power class.

(4) Determining the effective time of the new power class by using time of a first time of uplink transmission after uplink transmission carrying the DPC.

Specifically, after reporting the DPC, the terminal may determine the effective time of the new power class by using the time of the first time of uplink transmission after the uplink transmission carrying the DPC. The new power class is not applicable to PUSCH transmission scheduled by DCI received by the terminal before PUSCH transmission carrying the DPC.

(5) Determining, for a same hybrid automatic repeat request HARQ process, the effective time of the new power class based on uplink transmission time of a PUSCH with scheduling a new transport block TB.

Specifically, after reporting the DPC, the terminal may determine, for the same HARQ process, the effective time of the new power class based on the uplink transmission time of the PUSCH with scheduling the new transport block (Transport Block, TB).

(6) Determining, for a same HARQ process, the effective time of the new power class based on downlink transmission time of a physical downlink control channel (Physical downlink control channel, PDCCH) with scheduling a new transport block TB.

Specifically, after reporting the DPC, the terminal may determine, for the same HARQ process, the effective time of the new power class based on the downlink transmission time of the PDCCH with scheduling the new transport block TB.

In this embodiment of this application, the terminal determines the effective time of the new power class by using the time offset, the network activation or indication, the network deactivation or indication, the time of the first time of uplink transmission after the uplink transmission carrying the DPC, or the transmission time of a PUSCH transmission with a new TB scheduled for the same HARQ process, or the transmission time of the downlink transmission with a new TB scheduled by PDCCH, thereby improving flexibility of determining the effective time of the new power class.

Optionally, the terminal determines a UL full power mode after the DPC is reported or the new power class takes effect.

Specifically, the terminal needs to determine the UL full power mode after the DPC is reported or the new power class takes effect.

Optionally, the determining a UL full power mode includes at least one of the following:

> (a) Determining the UL full power mode by using a radio resource control (Radio Resource Control, RRC) reconfiguration.

Specifically, after the terminal reports the DPC or the new power class takes effect, the network-side device configures the UL full power mode to the terminal by using the RRC reconfiguration. After receiving the RRC reconfiguration of the network-side device, the terminal may determine the UL full power mode by using the RRC reconfiguration.

(b) Determining at least one UL full power mode corresponding to the power class via an RRC configuration.

Specifically, after the terminal reports the DPC or the new power class takes effect, the network-side device may configure the at least one UL full power mode corresponding to the power class for the terminal via the RRC configuration. After receiving the RRC configuration of the network-side device, the terminal may determine the at least one UL full power mode corresponding to the power class via the RRC configuration.

For example, for a terminal having a power class 1.5, three UL full power modes may be configured. When the power class of the terminal falls back from the power class 1.5 to a power class 2, after the terminal receives a UL full power mode corresponding to an uplink full power transmission PC2-r18 (ul-FullPowerTransmissionPC2-r18) parameter configured by the network-side device, the terminal needs to use the UL full power mode configured by using the ul-FullPowerTransmissionPC2-r18 parameter.

(c) Determining the UL full power mode by using a DCI or MAC-CE configuration.

Specifically, after the terminal reports the DPC or the new power class takes effect, the network-side device may configure the UL full power mode to the terminal by using the DCI or MAC-CE configuration. After receiving the DCI or MAC-CE configuration of the network device, the terminal may determine the UL full power mode by using the DCI or MAC-CE configuration.

(d) Determining the UL full power mode by using a DCI or MAC-CE indication.

Specifically, after the terminal reports the DPC or the new power class takes effect, the network-side device may indicate, by using the DCI or MAC-CE indication, whether a UL full power mode of the terminal changes. After receiving the DCI or MAC-CE indication, the terminal may determine the UL full power mode by using the DCI or MAC-CE indication.

In this embodiment of this application, after the DPC is reported or the new power class takes effect, the terminal determines the UL full power mode by using the RRC reconfiguration, or determines the at least one UL full power mode corresponding to the power class via the RRC configuration, or determines the UL full power mode by using the DCI or MAC-CE configuration, or determines, by using the DCI or MAC-CE indication, whether the UL full power mode changes, to determine the UL full power mode. Therefore, the terminal is enabled to use the corresponding UL full power mode, and the network-side device and the terminal have the same assumption about the precoding information and the quantity of layers used for the uplink transmission.

Optionally, the terminal reports target information to the network-side device in a case that the new power class is an increased power class, and the target information is used by the network-side device to determine a UL full power mode.

It should be noted that in the case that the new power class of the terminal is the increased power class, that is, the terminal may restore itself to an original power class (a power class increase), the network-side device also needs to determine the UL full power mode.

Specifically, after restoring to the original power class, the terminal triggers target information reporting, and reports the target information to the network-side device. After receiving the target information, the network-side device may determine the UL full power mode based on the target information.

Optionally, the target information includes any one of the following: the DPC; restored power class information; and restoration indication information (for example, restoration indication information of 1 bit).

Optionally, the UL full power mode is a UL full power mode corresponding to a most recent power class of the terminal.

Specifically, after the terminal restores to the original power class, the UL full power mode is the UL full power mode corresponding to the most recent power class of the terminal.

According to the power class-related information reporting method provided in this embodiment of this application, the execution body may be a power class-related information reporting apparatus. In an embodiment of this application, an example in which the power class-related information reporting apparatus performs the power class-related information reporting method is used to describe the power class-related information reporting apparatus provided in this embodiment of this application.

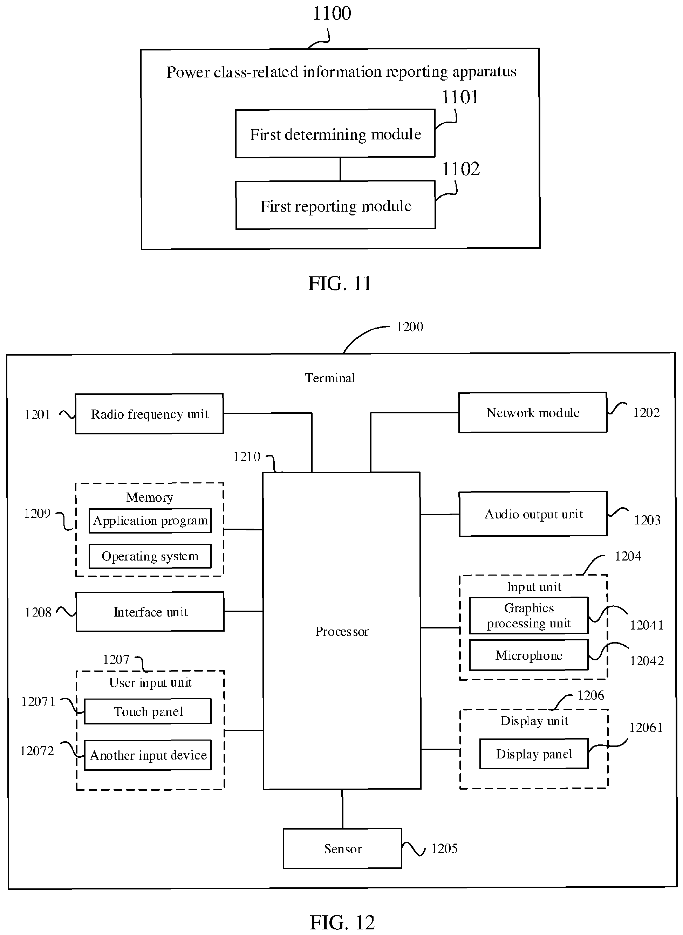

FIG. 11 is a schematic structural diagram of a power class-related information reporting apparatus according to an embodiment of this application. As shown in FIG. 11, the power class-related information reporting apparatus 1100 includes:

a first determining module 1101, configured to determine power class-related information; and

a first reporting module 1102, configured to report the power class-related information to a network-side device in a case that a first condition is met, where the first condition is a trigger condition for reporting the power class-related information.

According to the power class-related information reporting apparatus provided in this embodiment of this application, in the case that the first condition is met, the power class-related information can be reported to the network-side device in a timely manner because the first condition is the trigger condition for reporting the power class-related information, thereby implementing reporting of the power class-related information.

Optionally, the first condition includes at least one of the following:

a trigger condition of a power headroom report PHR;

a delta power class DPC used for current uplink transmission is different from a reference DPC;

a difference between a DPC used for current uplink transmission and a reference DPC is greater than or equal to a first threshold;

a difference between a DPC used for current uplink transmission and a reference DPC is less than or equal to a second threshold;

an actual power class of the terminal is different from a reference Power Class;

an actual Power Class of the terminal is different from a reference Power Class, and a timer corresponding to the Power Class of the terminal expires;

a DPC used for current uplink transmission is greater than or equal to a third threshold;

a DPC used for current uplink transmission is less than or equal to a fourth threshold;

an uplink beam used for current uplink transmission is different from an uplink beam used for last uplink transmission or uplink beams used for a plurality of times of previous uplink transmission;

a transmission interval between current uplink transmission and last uplink transmission is greater than or equal to a fifth threshold; and

a transmission interval between current uplink transmission and last uplink transmission is less than or equal to a sixth threshold.

Optionally, the reference DPC includes any one of the following:

a DPC used for the last uplink transmission; and

DPCs corresponding to the plurality of times of previous uplink transmission.

Optionally, the last uplink transmission or the plurality of times of previous uplink transmission are determined based on a first time window; and a length of the first time window is determined based on a network configuration or a protocol predefinition.

Optionally, the first time window is associated with a second time window; and the second time window includes at least one of the following:

a PHR reporting period;
a synchronization signal block SSB period;
a channel state information-reference signal CSI-RS period;
a sounding reference signal SRS period;
an SSB to a physical random access channel PRACH occasion association period;
an SSB to a PRACH occasion association mode period; and
a CG period corresponding to a physical uplink shared channel PUSCH scheduled by a configured grant CG.

Optionally, the DPCs corresponding to the plurality of times of previous uplink transmission are determined based on all DPCs of the plurality of times of previous uplink transmission.

Optionally, the DPCs corresponding to the plurality of times of previous uplink transmission include any one of the following: an average value of all the DPCs of the plurality of times of previous uplink transmission; a weighted average of all the DPCs of the plurality of times of previous uplink transmission; and a median of all the DPCs of the plurality of times of previous uplink transmission.

Optionally, the power class-related information reporting apparatus 1100 further includes:
a second determining module, configured to determine, based on at least one of the following in a case that the current uplink transmission is a first time of uplink transmission, that the DPC used for the current uplink transmission is different from the reference DPC:

a preset value;
the DPC used for the current uplink transmission; and
a network configuration or a protocol predefinition.

Optionally, the current uplink transmission and the last uplink transmission meet at least one of the following:

a same uplink transmission channel;
different uplink transmission channels;
uplink transmission on a same carrier frequency;
uplink transmission on a same cell; and
a same uplink beam.

Optionally, the power class-related information reporting apparatus 1100 further includes:
a cancellation module, configured to cancel reporting the power class-related information to the network-side device in a case that the network-side device learns of an actually assumed DPC used by the terminal.

Optionally, that the network-side device learns of an actually assumed DPC used by the terminal includes at least one of the following:

the terminal is configured with a supplementary uplink SUL, and a requirement for a default power class of the terminal is applied to a band for which the terminal indicates a power class; and
a terminal having a power class PC2 function with a transmit diversity txDiversity-r16 function or a terminal having a PC1.5 function indicates an SRS transmit channel switching TxSwitch function, and in a case that SRS transmission configured as antenna switching is used in an SRS resource set, an SRS resource configured in each SRS resource set consists of one SRS port, where
maximum power P-max indicated by the terminal with a PC2 function is less than or equal to a seventh threshold; and
maximum power P-max indicated by the terminal with a PC1.5 function is less than or equal to an eighth threshold.

Optionally, the power class-related information includes at least one of the following: a delta power class DPC; and an uplink full power transmission capability corresponding to a power class.

Optionally, the DPC includes at least one of the following:

first indication information, used to indicate a value of the DPC, where the first indication information is bit information with a preset length; and
second indication information, used to indicate whether a power class of the terminal falls back.

Optionally, reporting the uplink full power transmission capability corresponding to the power class includes any one of the following:

The terminal reports UL full power transmission capabilities corresponding to all supported power classes; and the terminal reports the UL full power transmission capability together with the DPC.

Optionally, the first reporting module 1102 is specifically configured to perform at least one of the following:

reporting the power class-related information to the network-side device by using a first medium access control MAC-control element CE, where the first medium access control MAC-control element CE is a MAC-CE not for reporting the PHR;

reporting the power class-related information to the network-side device by using a second MAC-CE, where the second MAC-CE is a MAC-CE for reporting the PHR;

reporting the power class-related information to the network-side device based on a form of each beam or that each beam group corresponds to one DPC; and

reporting the power class-related information to the network-side device based on a form of each serving cell or that each serving cell group corresponds to one DPC.

Optionally, the serving cell group meets at least one of the following:

all intra-band serving cells are treated as one serving cell group;

all intra-frequency serving cells are treated as one serving cell group; and

a network configuration or a protocol predefinition.

Optionally, reporting of the DPC includes periodic reporting or aperiodic reporting.

Optionally, the aperiodic reporting meets at least one of the following:

a downlink control information DCI activation or indication;

a MAC-CE activation or indication; and

timer triggering.

Optionally, the power class-related information reporting apparatus 1100 further includes:
a third determining module, configured to determine effective time of a new power class after the DPC is reported.

Optionally, the new power class includes a fallback power class, an increased power class, or a restored power class.

Optionally, the third determining module is specifically configured to perform at least one of the following:

determining the effective time of the new power class by using a time offset;

determining the effective time of the new power class by using a network activation or indication;

determining the effective time of the new power class by using a network deactivation or indication;

determining the effective time of the new power class by using time of a first time of uplink transmission after uplink transmission carrying the DPC;

determining, for a same hybrid automatic repeat request HARQ process, the effective time of the new power class based on uplink transmission time of a PUSCH with scheduling a new transport block TB; and

determining, for a same HARQ process, the effective time of the new power class based on downlink transmission time of a physical downlink control channel PDCCH with scheduling a new transport block TB.

Optionally, the time offset is determined based on a network configuration, a protocol predefinition, or a target factor; and the target factor includes PUSCH processing time or MAC processing time.

Optionally, the power class-related information reporting apparatus 1100 further includes:
a fourth determining module, configured to determine a UL full power mode after the DPC is reported or the new power class takes effect.

Optionally, the fourth determining module is specifically configured to perform at least one of the following:

determining the UL full power mode by using a radio resource control RRC reconfiguration;

determining at least one UL full power mode corresponding to the power class via an RRC configuration;

determining the UL full power mode by using a DCI or MAC-CE configuration; and

determining, by using a DCI or MAC-CE indication, whether the UL full power mode changes.

Optionally, the power class-related information reporting apparatus 1100 further includes:
a second reporting module, configured to report target information to the network-side device in a case that the new power class is an increased power class, where the target information is used by the network-side device to determine a UL full power mode.

Optionally, the target information includes any one of the following: the DPC; restored power class information;

and restoration indication information.

Optionally, the UL full power mode is a UL full power mode corresponding to a most recent power class of the terminal.

The power class-related information reporting apparatus in this embodiment of this application may be an electronic device, for example, an electronic device with an operating system, or may be a component in the electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The power class-related information reporting apparatus provided in this embodiment of this application can implement the processes implemented in the method embodiments of FIG. 5 to FIG. 10, and achieve same technical effects. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 5. The terminal embodiment corresponds to the foregoing terminal-side method embodiment. Each implementation process and implementation of the foregoing method embodiment may be applied to the terminal embodiment, and same technical effects can be achieved. Specifically, FIG. 12 is a schematic diagram of a hardware structure of a terminal for implementing an embodiment of this application.

The terminal 1200 includes but is not limited to at least some components of a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

A person skilled in the art may understand that the terminal 1200 may further include a power supply (for example, a battery) that supplies power to each component. The power supply may be logically connected to the processor 1210 by using a power management system, to implement functions such as charging management, discharging management, and power consumption management through the power management system. The structure of the terminal shown in FIG. 12 does not constitute a limitation on the terminal. The terminal may include more or fewer components than those shown in the figure, or combine some components, or have different component arrangements. Details are not described herein again.

It should be understood that in this embodiment of this application, the input unit 1204 may include a graphics processing unit (Graphics Processing Unit, GPU) 12041 and a microphone 12042. The graphics processing unit 12041 processes image data of a still picture or a video obtained by an image capture apparatus (for example, a camera) in a video capture mode or an image capture mode. The display unit 1206 may include a display panel 12061, and the display panel 12061 may be configured in a form of a liquid crystal display, an organic light-emitting diode, or the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 1201 may transmit the downlink data to the processor 1210 for processing. In addition, the radio frequency unit 1201 may send uplink data to the network-side device. Generally, the radio frequency unit 1201 includes but is not limited to an antenna, an amplifier, a transceiver, a coupler, a low-noise amplifier, a duplexer, and the like.

The memory 1209 may be configured to store a software program or instructions and various types of data. The memory 1209 may mainly include a first storage area for storing a program or instructions and a second storage area for storing data. The first storage area may store an operating system, an application program or instructions required by at least one function (for example, a sound playing function and an image playing function), and the like. In addition, the memory 1209 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchronous link DRAM, SLDRAM), and a direct rambus random access memory (Direct Rambus RAM, DRRAM). The memory 1209 in this embodiment of this application includes but is not limited to these memories and any other suitable type of memory.

The processor 1210 may include one or more processing units. Optionally, the processor 1210 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 1210.

The processor 1210 is configured to determine power class-related information; and report the power class-related information to a network-side device in a case that a first condition is met, where the first condition is a trigger condition for reporting the power class-related information.

According to the terminal provided in this embodiment of this application, in the case that the first condition is met, the terminal can report the power class-related information to the network-side device in a timely manner because the first condition is the trigger condition for reporting the power class-related information, thereby implementing reporting of the power class-related information.

An embodiment of this application further provides a readable storage medium, where the readable storage medium stores a program or instructions, the program or instructions are executed by a processor to implement the processes in the foregoing power class-related information reporting method embodiment, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, the chip includes a processor and a communication interface, the communication interface is coupled to the processor, the processor is configured to run a program or instructions to implement the processes in the foregoing power class-related information reporting method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing power class-related information reporting method embodiment, and same technical effects can be achieved. To avoid repetition, details are not described herein again.

It should be noted that in this specification, the term "include", "comprise", or any other variant thereof is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A power class-related information reporting method, comprising:

   determining, by a terminal, power class-related information; and
   reporting, by the terminal, the power class-related information to a network-side device in a case that a first condition is met, wherein the first condition is a trigger condition for reporting the power class-related information.

2. The power class-related information reporting method according to claim 1, wherein the first condition comprises at least one of the following:

a trigger condition of a power headroom report PHR;
a delta power class DPC used for current uplink transmission is different from a reference DPC;
a difference between a DPC used for current uplink transmission and a reference DPC is greater than or equal to a first threshold;
a difference between a DPC used for current uplink transmission and a reference DPC is less than or equal to a second threshold;
an actual power class of the terminal is different from a reference power class;
an actual power class of the terminal is different from a reference power class, and a timer corresponding to the power class of the terminal expires;
a DPC used for current uplink transmission is greater than or equal to a third threshold;
a DPC used for current uplink transmission is less than or equal to a fourth threshold;
an uplink beam used for current uplink transmission is different from an uplink beam used for last uplink transmission or uplink beams used for a plurality of times of previous uplink transmission;
a transmission interval between current uplink transmission and last uplink transmission is greater than or equal to a fifth threshold; and
a transmission interval between current uplink transmission and last uplink transmission is less than or equal to a sixth threshold.

3. The power class-related information reporting method according to claim 2, wherein the reference DPC comprises any one of the following:

a DPC used for the last uplink transmission; and
DPCs corresponding to the plurality of times of previous uplink transmission.

4. The power class-related information reporting method according to claim 2 or 3, wherein the last uplink transmission or the plurality of times of previous uplink transmission are determined based on a first time window; and a length of the first time window is determined based on a network configuration or a protocol predefinition.

5. The power class-related information reporting method according to claim 4, wherein the first time window is associated with a second time window; and the second time window comprises at least one of the following:

a PHR reporting period;
a synchronization signal block SSB period;
a channel state information-reference signal CSI-RS period;
a sounding reference signal SRS period;
an SSB to a physical random access channel PRACH occasion association period;
an SSB to a PRACH occasion association mode period; and
a configured grant CG period corresponding to a physical uplink shared channel PUSCH scheduled by a CG.

6. The power class-related information reporting method according to claim 3, wherein the DPCs corresponding to the plurality of times of previous uplink transmission are determined based on all DPCs of the plurality of times of previous uplink transmission.

7. The power class-related information reporting method according to any one of claims 3 to 6, wherein the DPCs corresponding to the plurality of times of previous uplink transmission comprise any one of the following: an average of all the DPCs of the plurality of times of previous uplink transmission; a weighted average of all the DPCs of the plurality of times of previous uplink transmission; and a median of all the DPCs of the plurality of times of previous uplink transmission.

8. The power class-related information reporting method according to claim 2, wherein the method further comprises:
determining, by the terminal based on at least one of the following in a case that the current uplink transmission is a first time of uplink transmission, that the DPC used for the current uplink transmission is different from the reference DPC:

a preset value;
the DPC used for the current uplink transmission; and
a network configuration or a protocol predefinition.

9. The power class-related information reporting method according to any one of claims 2 to 8, wherein the current uplink transmission and the last uplink transmission meet at least one of the following:

a same uplink transmission channel;
different uplink transmission channels;
uplink transmission on a same carrier frequency;
uplink transmission on a same cell; and
a same uplink beam.

10. The power class-related information reporting method according to any one of claims 1 to 9, wherein the method further comprises:
canceling, by the terminal, reporting the power class-related information to the network-side device in a case that the network-side device learns of an actually assumed DPC used by the terminal.

11. The power class-related information reporting method according to claim 10, wherein that the network-side device learns of an actually assumed DPC used by the terminal comprises at least one of the following:

the terminal is configured with a supplementary uplink SUL, and a requirement for a default power class of the terminal is applied to a band for which the terminal indicates a power class; and
a terminal having a power class PC2 function with a transmit diversity txDiversity-r16 function or a terminal having a PC1.5 function indicates an SRS transmit channel switching TxSwitch function, and in a case that SRS transmission configured as antenna switching is used in an SRS resource set, an SRS resource configured in each SRS resource set consists of one SRS port, wherein
maximum power P-max indicated by the terminal with a PC2 function is less than or equal to a seventh threshold; and
maximum power P-max indicated by the terminal with a PC1.5 function is less than or equal to an eighth threshold.

12. The power class-related information reporting method according to any one of claims 1 to 11, wherein the power class-related information comprises at least one of the following: a delta power class DPC; and an uplink full power transmission capability corresponding to a power class.

13. The power class-related information reporting method according to claim 12, wherein the DPC comprises at least one of the following:

first indication information, used to indicate a value of the DPC, wherein the first indication information is bit information with a preset length; and
second indication information, used to indicate whether a power class of the terminal falls back.

14. The power class-related information reporting method according to claim 12, wherein reporting the uplink full power transmission capability corresponding to the power class comprises any one of the following:

reporting, by the terminal, UL full power transmission capabilities corresponding to all supported power classes; and
reporting, by the terminal, the UL full power transmission capability together with the DPC.

15. The power class-related information reporting method according to any one of claims 1 to 14, wherein the reporting the power class-related information to a network-side device comprises any one of the following:

reporting the power class-related information to the network-side device by using a first medium access control MAC-control element CE, wherein the first medium access control MAC-control element CE is a MAC-CE not for reporting the PHR;
reporting the power class-related information to the network-side device by using a second MAC-CE, wherein the second MAC-CE is a MAC-CE for reporting the PHR;
reporting the power class-related information to the network-side device based on a form of each beam or that each beam group corresponds to one DPC; and

reporting the power class-related information to the network-side device based on a form of each serving cell or that each serving cell group corresponds to one DPC.

16. The power class-related information reporting method according to claim 15, wherein the serving cell group meets at least one of the following:

all intra-band serving cells are treated as one serving cell group;

all intra-frequency serving cells are treated as one serving cell group; and

a network configuration or a protocol predefinition.

17. The power class-related information reporting method according to claim 12, wherein reporting of the DPC comprises periodic reporting or aperiodic reporting.

18. The power class-related information reporting method according to claim 17, wherein the aperiodic reporting meets at least one of the following:

a downlink control information DCI activation or indication;

a MAC-CE activation or indication; and

timer triggering.

19. The power class-related information reporting method according to any one of claims 12 to 18, wherein the method further comprises:

determining, by the terminal, effective time of a new power class after reporting the DPC.

20. The power class-related information reporting method according to claim 19, wherein the new power class comprises a fallback power class, an increased power class, or a restored power class.

21. The power class-related information reporting method according to claim 19 or 20, wherein the determining effective time of a new power class comprises at least one of the following:

determining the effective time of the new power class by using a time offset;

determining the effective time of the new power class by using a network activation or indication;

determining the effective time of the new power class by using a network deactivation or indication;

determining the effective time of the new power class by using time of a first time of uplink transmission after uplink transmission carrying the DPC;

determining, for a same hybrid automatic repeat request HARQ process, the effective time of the new power class based on uplink transmission time of a PUSCH with scheduling a new transport block TB; and

determining, for a same HARQ process, the effective time of the new power class based on downlink transmission time of a physical downlink control channel PDCCH with scheduling a new transport block TB.

22. The power class-related information reporting method according to claim 21, wherein the time offset is determined based on a network configuration, a protocol predefinition, or a target factor; and the target factor comprises PUSCH processing time or MAC processing time.

23. The power class-related information reporting method according to any one of claims 19 to 22, wherein the method further comprises:

determining, by the terminal, a UL full power mode after the DPC is reported or the new power class takes effect.

24. The power class-related information reporting method according to claim 23, wherein the determining a UL full power mode comprises at least one of the following:

determining the UL full power mode by using a radio resource control RRC reconfiguration;

determining at least one UL full power mode corresponding to the power class via an RRC configuration;

determining the UL full power mode by using a DCI or MAC-CE configuration; and

determining the UL full power mode by using a DCI or MAC-CE indication.

25. The power class-related information reporting method according to claim 20, wherein the method further comprises:

reporting, by the terminal, target information to the network-side device in a case that the new power class is an increased power class, wherein the target information is used by the network-side device to determine a UL full power mode.

26. The power class-related information reporting method according to claim 25, wherein the target information comprises any one of the following: the DPC; restored power class information; and restoration indication information.

27. The power class-related information reporting method according to any one of claims 23 to 26, wherein the UL full power mode is a UL full power mode corresponding to a most recent power class of the terminal.

28. A power class-related information reporting apparatus, comprising:

a first determining module, configured to determine power class-related information; and
a first reporting module, configured to report the power class-related information to a network-side device in a case that a first condition is met, wherein the first condition is a trigger condition for reporting the power class-related information.

29. A terminal, comprising a processor and a memory, wherein the memory stores a program or instructions capable of running on the processor, and the program or the instructions are executed by the processor to implement the steps of the power class-related information reporting method according to any one of claims 1 to 27.

30. A readable storage medium, wherein a program or instructions are stored in the readable storage medium, and the program or the instructions are executed by a processor to implement the steps of the power class-related information reporting method according to any one of claims 1 to 27.

FIG. 1

FIG. 2

PHR includes:
Real (Real) PH for Cell 1+Real
or virtual (Virtual) PH for Cell
2+Virtual PH for Cell 3

CG PUSCH
with PHR

A PHR is
triggered

UL grant
(grant)

Active (Active)
Cell 1:
PHR CC

T'proc,2

Time (time)

T-trigger
(trigger)

T-calculate
(calculate)

CG PUSCH

Active Cell 2

time

UL grant

CG PUSCH

Active Cell 3

time

UL grant

CG PUSCH

Active Cell 4

time

## FIG. 3

| $C_7$ | $C_6$ | $C_5$ | $C_4$ | $C_3$ | $C_2$ | $C_1$ | R |
|---|---|---|---|---|---|---|---|
| P | V | PH (Type 2 or SpCell of another MAC entity) | | | | | |
| MPE or R | | $P_{CMAX,f,c}$ 1 | | | | | |
| P | V | PH (Type 2 or PCell) | | | | | |
| MPE or R | | $P_{CMAX,f,c}$ 2 | | | | | |
| P | V | PH (Type X or Serving Cell 1) | | | | | |
| MPE or R | | $P_{CMAX,f,c}$ 3 | | | | | |
| ... | | | | | | | |
| P | V | PH (Type X or Serving Cell n) | | | | | |
| MPE or R | | $P_{CMAX,f,c}$ m | | | | | |

## FIG. 4

| A terminal determines power class-related information | 501 |

| The terminal reports the power class-related information to a network-side device in a case that a first condition is met, where the first condition is a trigger condition for reporting the power class-related information | 502 |

FIG. 5

| R | R | R | R | R | R | DPC |
|---|---|---|---|---|---|-----|

FIG. 6

| R | R | PH (Type 1 or PCell) |
|---|---|----------------------|
| DPC | | $P_{CMAX,f,c}$ |

FIG. 7

| R | DPC | PH (Type 1 or PCell) |
|---|-----|----------------------|
| MPE or R | | $P_{CMAX,f,c}$ |

FIG. 8

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| $DPC_3$ | | $DPC_2$ | | $DPC_1$ | | $DPC_0$ | |
| ... | | | | | | | |
| $DPC_m$ | | $DPC_{m-1}$ | | $DPC_{m-2}$ | | $DPC_{m-3}$ | |

FIG. 9

| R | R | PH (Type 1 or PCell) | | | | | |
|---|---|---|---|---|---|---|---|
| R | R | $P_{CMAX,f,c}$ | | | | | |
| $C_7$ | $C_6$ | $C_5$ | $C_4$ | $C_3$ | $C_2$ | $C_1$ | R |
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| $DPC_3$ | | $DPC_2$ | | $DPC_1$ | | $DPC_0$ | |
| ... | | | | | | | |
| $DPC_m$ | | $DPC_{m-1}$ | | $DPC_{m-2}$ | | $DPC_{m-3}$ | |

FIG. 10

1100

Power class-related information reporting apparatus

1101

First determining module

1102

First reporting module

FIG. 11

1200

Terminal

1201 Radio frequency unit

Network module 1202

1210

Memory
1209 Application program
Operating system

Audio output unit 1203

1204
Input unit
Graphics processing unit 12041
Microphone 12042

1208 Interface unit

Processor

1207
User input unit
12071 Touch panel
12072 Another input device

1206
Display unit 12061
Display panel

Sensor 1205

FIG. 12

## INTERNATIONAL SEARCH REPORT

| | International application No. |
|---|---|
| | **PCT/CN2024/108918** |

**A. CLASSIFICATION OF SUBJECT MATTER**

H04W 72/21(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNKI, IEEE, CNTXT, DWPI, ENTXT, ENTXTC, VEN: 传输, 发送, 接收, 上报, 功率, 等级, 功率等级, 功率余量, 偏差, 偏移, Delta Power Class, DPC, PC, Power Class, Power-Class, PowerClass, PHR, report, capability

**C. DOCUMENTS CONSIDERED TO BE RELEVANT**

| Category* | Citation of document, with indication, where appropriate, of the relevant passages | Relevant to claim No. |
|---|---|---|
| X | ERICSSON. "Power Domain Enhancement Schemes and Performance" *3GPP TSG-RAN WG1 Meeting #112bis-E, R1-2303662*, 26 April 2023 (2023-04-26), pages 10-14 | 1-30 |
| A | CN 115529657 A (ZTE CORP.) 27 December 2022 (2022-12-27) entire document | 1-30 |
| A | CN 110720241 A (GUANGDONG OPPO MOBILE TELECOMMUNICATIONS CORP., LTD.) 21 January 2020 (2020-01-21) entire document | 1-30 |
| A | CN 113472407 A (VIVO MOBILE COMMUNICATION CO., LTD.) 01 October 2021 (2021-10-01) entire document | 1-30 |
| A | US 2023217376 A1 (CHINA TELECOM CORP., LTD.) 06 July 2023 (2023-07-06) entire document | 1-30 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 October 2024** | **06 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108918**

| Patent document cited in search report | | | Publication date (day/month/year) | Patent family member(s) | | | Publication date (day/month/year) |
|---|---|---|---|---|---|---|---|
| CN | 115529657 | A | 27 December 2022 | None | | | |
| CN | 110720241 | A | 21 January 2020 | WO | 2020029077 | A1 | 13 February 2020 |
| CN | 113472407 | A | 01 October 2021 | WO | 2021197149 | A1 | 17 October 2021 |
| US | 2023217376 | A1 | 06 July 2023 | WO | 2022001373 | A1 | 06 January 2022 |
| | | | | CN | 113873497 | A | 31 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310981365